# EUROPÄISCHE PATENTSCHRIFT

(11) **EP 2 997 062 B1**
(45) Veröffentlichungstag und Bekanntmachung des Hinweises auf die Patenterteilung: **06.12.2017**
(21) Anmeldenummer: 14725099.7
(22) Anmeldetag: 14.05.2014
(51) Int. Cl.: C08G 18/48, C08G 18/50, C08G 18/66, C08G 18/69, C08G 18/32, C09J 175/04

(54) **ZWEIKOMPONENTIGE POLYURETHANZUSAMMENSETZUNG**
TWO-COMPONENT POLYURETHANE COMPOSITION
COMPOSITION DE POLYURÉTHANE À DEUX COMPOSANTS

(30) Priorität: 15.05.2013 EP 13167914
(43) Veröffentlichungstag der Anmeldung: 23.03.2016
(73) Patentinhaber: Sika Technology AG, 6340 Baar (CH)
(72) Erfinder: ROOCK, Wolfgang, 25482 Appen (DE); KELCH, Steffen, CH-8102 Oberengstringen (CH); THOMAS, Andrea, 25335 Bokholt-Hanredder (DE)
(74) Vertreter: Sika Patent Attorneys
(86) Internationale Anmeldenummer: PCT/EP2014/059875
(87) Internationale Veröffentlichungsnummer: WO 2014/184257

(56) Entgegenhaltungen:
- EP-A1- 1 690 880
- EP-A1- 2 468 789
- FR-A1- 2 938 267

## Beschreibung

### Technisches Gebiet

Die Erfindung betrifft das Gebiet der zweikomponentigen Polyurethanzusammensetzungen und ihre Verwendung, insbesondere als Klebstoff oder als Vergussmasse.

### Stand der Technik

Zweikomponentige Polyurethanklebstoffe auf Basis von Polyolen und Polyisocyanaten werden bereits seit langem eingesetzt. Zweikomponentige Polyurethanklebstoffe haben den Vorteil, dass sie nach dem Mischen schnell aushärten und deshalb bereits nach kurzer Zeit höhere Kräfte aufnehmen und übertragen können. Für den Einsatz als strukturelle Klebstoffe werden hohe Ansprüche in Bezug auf Festigkeit und Anhaftungskräfte an solche Klebstoffe gestellt, da derartige Klebstoffe Elemente von Last tragenden Strukturen darstellen. Die Patentanmeldung FR 08 06237 offenbart Polyurethanzusammensetzungen bestehend aus einer ersten und einer zweiten Komponente, wobei die erste Komponente ein Polyetherpolyol mit einer Funktionalität von 3 und einer Molekulargewicht von 443, ein Polyetherdiol mit einer Molekulargewicht von 644, ein Polybutadienpolyol mit einer Funktionalität von 2,8 und einer Molekulargewicht von 2800 und Ethyl-2-hexan-1,3-diol umfasst; und die zweite Komponente MDI umfasst. Die erste Komponente enthält aber kein alkoxyliertes aromatisches Diol mit einem mittleren Molekulargewicht im Bereich von 300 bis 1000 g/mol. Es besteht insbesondere der Wunsch nach Klebstoffen, die hohe Festigkeiten und Elastizität im Sinne struktureller Verklebungen über einen möglichst grossen Temperaturbereich verbunden mit einer wenig ausgeprägten Abhängigkeit der Festigkeit von der Temperatur aufweisen. Gewünscht sind weiterhin Klebstoffe, welche eine gute Haftung auf metallischen Substraten zeigen und sowohl bei Umgebungstemperatur als auch in einem durch Wärme beschleunigten Aushärtungsprozess zur Endfestigkeit gehärtet werden können.

### Darstellung der Erfindung

Aufgabe der vorliegenden Erfindung ist es daher, eine zweikomponentige Polyurethanzusammensetzung zur Verfügung zu stellen, welche über eine sehr hohe Festigkeit, eine gewisse Elastizuität und eine nur schwach ausgeprägte Abhängigkeit der mechanischen Eigenschaften von der Temperatur verfügt und gute Haftungseigenschaften auf metallischen Untergründen aufweist.

Überraschenderweise wird diese Aufgabe mit der erfindungsgemässen Polyurethanzusammensetzung gelöst. Sie weist einen hohen Gehalt eines Polybutadienpolyols auf. Weiterhin enthält sie ein Polyetherpolyol, ein alkoxyliertes aromatisches Diol und ein niedermolekulares aliphatisches oder cycloaliphatisches Diol in speziellen Verhältnissen. Die Zusammensetzung verfügt über eine sehr hohe Festigkeit und gute Elastizität, eine ausgezeichnete Formbeständigkeit bei hohen Temperaturen, eine nur schwach ausgeprägte Abhängigkeit der mechanischen Eigenschaften von der Temperatur und sehr gute Haftungseigenschaften auf metallischen Substraten. Dies ist insbesondere aus den hohen Werten für die Zugscherfestigkeit im Temperaturbereich von -35 bis 85 °C und an den hohen Werten für die Formbeständigkeitstemperatur (HDT) ersichtlich. Zudem ist die Zusammensetzung besonders beständig gegenüber Feuchtigkeit.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine Polyurethanzusammensetzung bestehend aus einer ersten und einer zweiten Komponente; wobei
- die erste Komponente
   - mindestens ein alkoxyliertes aromatisches Diol **A1** mit einem mittleren Molekulargewicht im Bereich von 300 bis 1'000 g/mol,
   - mindestens ein aliphatisches oder cycloaliphatisches Diol **A2** mit einem Molekulargewicht im Bereich von 90 bis 200 g/mol,
   - mindestens ein Polybutadienpolyol **A3** mit einer mittleren OH-Funktionalität im Bereich von 2.1 bis 2.9, insbesondere 2.3 bis 2.7, und mit einem mitleren Molekulargewicht im Bereich von 2000 bis 4000 g/mol, insbesondere 2500 bis 3000 g/mol, und
   - mindestens ein Polyetherpolyol **A4** mit einer OH-Funktionalität im Bereich von 2.2 bis 4 und einem mittleren Molekulargewicht im Bereich von 400 bis 4000 g/mol umfasst; und
- die zweite Komponente
   - mindestens ein Polyisocyanat umfasst;
      wobei das Diol **A1,** das Diol **A2,** das Polybutadienpolyol **A3** und das Polyetherpolyol **A4** in einer solchen Menge vorhanden sind, dass
   - das Gewichtsverhältnis **A1/A2** im Bereich von 0.1 bis 1, bevorzugt 0.1 bis 0.7, insbesondere 0.2 bis 0.6, liegt,
   - das Gewichtsverhältnis **(A3+A4)/(A1+A2)** im Bereich von 1.8 bis 8, bevorzugt 1.8 bis 5.5, insbesondere bevorzugt 1.8 bis 5, am meisten bevorzugt 1.8 bis 3, liegt, und
   - der Anteil an Polybutadienpolyol **A3** bezogen auf alle in der ersten Komponente vorhandenen Polyole im Bereich von 30 bis 80 Gewichts-%, bevorzugt 35 bis 70 Gewichts-%, insbesondere 35 bis 60 Gewichts-%, liegt.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Unter "Molekulargewicht" versteht man im vorliegenden Dokument die molare Masse (in Gramm pro Mol) eines Moleküls. Als "mittleres Molekulargewicht" wird das zahlenmittlere Molekulargewicht Mₙ einer oligomeren oder polymeren Mischung von Molekülen bezeichnet, welches üblicherweise mittels GPC gegen Polystyrol als Standard bestimmt wird.

Als "primäre Hydroxylgruppe" wird eine OH-Gruppe bezeichnet, welche an ein C-Atom mit zwei Wasserstoffen gebunden ist.

Als "Offenzeit" wird in diesem Dokument die Zeit bezeichnet, innerhalb welcher die zu verklebenden Teile gefügt sein müssen, nachdem die Komponenten vermischt sind.

Der Begriff "Festigkeit" bezeichnet im vorliegenden Dokument die Festigkeit des ausgehärteten Klebstoffs, wobei mit Festigkeit insbesondere die Zugfestigkeit und das Elastizitätsmodul (E-Modul), insbesondere im Dehnungsbereich 0.05 bis 0.25 %, gemeint sind.

Als "Raumtemperatur" wird im vorliegenden Dokument eine Temperatur von 23 °C bezeichnet.

Die erste Komponente der Zusammensetzung umfasst mindestens ein alkoxyliertes aromatisches Diol **A1** mit einem mittleren Molekulargewicht im Bereich von 300 bis 1'000 g/mol.

Beim alkoxylierten aromatischen Diol **A1** handelt es sich insbesondere um ein Polyetherdiol mit einem aromatischen Anteil, wie es insbesondere durch Alkoxylierung eines aromatischen Diols mit zwei phenolischen OH-Gruppen erhältlich ist.

Bevorzugt stellt das alkoxylierte aromatische Diol **A1** ein ethoxyliertes und/oder propoxyliertes und/oder butoxyliertes aromatisches Diol dar, insbesondere ein ethoxyliertes und/oder propoxyliertes aromatisches Diol. Diese Diole sind besonders gut zugänglich.

Besonders bevorzugt stellt das alkoxylierte aromatische Diol **A1** ein propoxyliertes aromatisches Diol dar. Diese Diole ergeben gut verarbeitbare Klebstoffe mit guten Haftungseigenschaften im ausgehärteten Zustand.

Der aromatische Anteil des alkoxylierten aromatischen Diols **A1** stellt bevorzugt einen Benzolrest, Naphthalinrest, Diphenylmethanrest, 1,1-Diphenylethanrest, 2,2-Diphenylpropanrest, Diphenyletherrest, Benzophenonrest, Bis-(phenyl)sulfonrest oder Biphenylrest dar.

Davon bevorzugt sind der Diphenylmethanrest und der 2,2-Diphenylpropanrest. Diese aromatischen Reste sind abgeleitet von Bisphenol F bzw. Bisphenol A. Solche alkylierten aromatischen Diole **A1** ergeben gut verarbeitbare Zusammensetzungen mit besonders hohen Festigkeiten, insbesondere mit hohen Werten in Zugfestigkeitsmessungen bei Temperaturen von -35 °C bis 85 °C.

Besonders bevorzugt stellt das alkoxylierte aromatische Diol **A1** ein propoxyliertes Bisphenol A oder ein propoxyliertes Bisphenol F, insbesondere ein propoxyliertes Bisphenol A, dar. Damit werden Zusammensetzungen mit besonders guten Haftungseigenschaften, insbesondere bei Temperaturen von 25 °C bis 85 °C, erhalten.

Das alkoxylierte aromatische Diol **A1** weist bevorzugt ein mittleres Molekulargewicht im Bereich von 350 bis 500 g/mol auf. Diese Diole **A1** ermöglichen besonders hohe Festigkeiten.

Die erste Komponente der Zusammensetzung umfasst weiterhin mindestens ein aliphatisches oder cycloaliphatisches Diol **A2** mit einem Molekulargewicht im Bereich von 90 bis 200 g/mol.

Es kann vorteilhaft sein, wenn das aliphatische oder cycloaliphatische Diol **A2** kein lineares Alkylendiol mit zwei primären OH-Gruppen darstellt, insbesondere nicht 1,4-Butandiol oder 1,5-Pentandiol. Solche linearen Diole sind dahingehend nachteilig, dass Zusammensetzungen mit tieferen Zugscherfestigkeiten, insbesondere bei Raumtemperatur und höheren Temperaturen, erhalten werden.

Bevorzugt als Diol **A2** sind verzweigte Alkylendiole, Alkylendiole mit einer primären und einer sekundären Hydroxylgruppe sowie cycloaliphatische Diole.

Bevorzugt ist das Diol **A2** ausgewählt aus der Gruppe bestehend aus 1,3-Butandiol, 2,3-Butandiol, 2-Methyl-1,3-propandiol, 1,2-Pentandiol, 2,4-Pentandiol, 2-Methyl-1,4-butandiol, 2,2-Dimethyl-1,3-propandiol (Neopentylglykol), 1,2-Hexandiol, 1,4-Butandiol, 3-Methyl-1,5-pentandiol, 1,2-Octandiol, 3,6-Octandiol, 2-Ethyl-1,3-hexandiol, 2,2,4-Trimethyl-1,3-pentandiol, 2-Butyl-2-ethyl-1,3-propandiol, 2,7-Dimethyl-3,6-octandiol, 1,4-Cyclohexandiol, 1,3-Cyclohexandimethanol und 1,4-Cyclohexandimethanol.

Besonders bevorzugt ist das Diol **A2** ausgewählt aus der Gruppe bestehend aus 1,3-Butandiol, 2,3-Butandiol, 2-Methyl-1,3-propandiol, 1,2-Pentandiol, 2,4-Pentandiol, 2-Methyl-1,4-butandiol, 2,2-Dimethyl-1,3-propandiol (Neopentylglykol), 1,2-Hexandiol, 3-Methyl-1,5-pentandiol, 1,2-Octandiol, 3,6-Octandiol, 2-Ethyl-1,3-hexandiol, 2,2,4-Trimethyl-1,3-pentandiol, 2-Butyl-2-ethyl-1,3-propandiol, 2,7-Dimethyl-3,6-octandiol, 1,4-Cyclohexandiol, 1,3-Cyclohexandimethanol und 1,4-Cyclohexandimethanol.

Davon bevorzugt sind 1,2-Butandiol, 1,3-Butandiol, 1,2-Pentandiol, 2-Methyl-1,4-butandiol, 2,2-Dimethyl-1,3-propandiol (Neopentylglykol), 3-Methyl-1,5-pentandiol, 1,2-Hexandiol, 1,2-Octandiol, 3,6-Octandiol und 2-Ethyl-1,3-hexandiol.

Am meisten bevorzugt als Diol **A2** ist 2-Ethyl-1,3-hexandiol. Dieses Diol ermöglicht Zusammensetzungen, welche bei der Aushärtung besonders hohe Werte für die Zugscherfestigkeit bei hohen Temperaturen ergeben.

Die erste Komponente der Zusammensetzung umfasst weiterhin mindestens ein Polybutadienpolyol **A3** mit einer mittleren OH-Funktionalität im Bereich von 2.1 bis 2.9, insbesondere 2.3 bis 2.7, und einem mittleren Molekulargewicht im Bereich von 2000 bis 4000 g/mol, insbesondere 2500 bis 3000 g/mol.

Solche Polybutadienpolyole sind insbesondere erhältlich durch die Polymerisation von 1,3-Butadien und Allylalkohol in einem geeigneten Verhältnis oder durch die Oxidation von geeigneten Polybutadienen.

Geeignete Polybutadienpolyole sind insbesondere Polybutadienpolyole, welche Strukturelemente der Formel (I) und gegebenenfalls Strukturelemente der Formeln (II) und (III) enthalten.

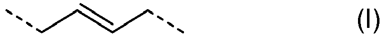

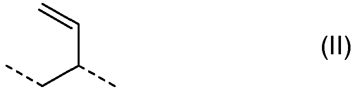

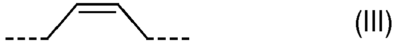

Bevorzugte Polybutadienpolyole enthalten 40 bis 80 %, insbesondere 55 bis 65 % des Strukturelements der Formel (I), 0 bis 30 %, insbesondere 15 bis 25 %, des Strukturelements der Formel (II), 0 bis 30 %, insbesondere 15 bis 25 %, des Strukturelements der Formel (III).

Besonders geeignete Polybutadienpolyole sind beispielweise erhältlich von Cray Valley unter dem Handelsnamen Poly bd® R-45HTLO oder Poly bd® R-45M.

Solche Polybutadienpolyole begünstigen zusammen mit den Diolen **A1** und **A2** ausgehärtete Zusammensetzungen mit weitgehend temperaturunabhängiger Festigkeit.

Die erste Komponente der Zusammensetzung umfasst weiterhin mindestens ein Polyetherpolyol **A4** mit einer OH-Funktionalität im Bereich von 2.2 bis 4 und einem mittleren Molekulargewicht im Bereich von 400 bis 4000 g/mol.

Die Mitverwendung solcher Polyetherpolyole **A4** ermöglicht elastische Zusammensetzungen mit besonders hohen Festigkeiten, insbesondere bei hohen Temperaturen.

Geeignete Polyetherpolyole sind insbesondere Polymerisationsprodukte von Ethylenoxid, 1,2-Propylenoxid, 1,2- oder 2,3-Butylenoxid, Oxetan oder Tetrahydrofuran, welche mit Hilfe von Startermolekülen mit drei oder vier OH- oder NH-Gruppen hergestellt sind. Insbesondere geeignete Startermoleküle sind 1,1,1-Trimethylolethan, 1,1,1-Trimethylolpropan, Glycerin und Ethylendiamin.

Ein besonders geeignetes Polyetherpolyol **A4** weist eine OH-Funktionalität im Bereich von 3.1 bis 4 und ein mittleres Molekulargewicht im Bereich von 1000 bis 4000 g/mol, bevorzugt 2000 bis 4000 g/mol, insbesondere 3000 bis 4000 g/mol, auf. Dabei handelt es sich insbesondere um ein auf Ethylendiamin gestartetes Polyethertetrol mit primären oder mit sekundären OH-Gruppen, insbesondere mit primären OH-Gruppen. Ein solches Polyethertetrol ermöglicht Zusammensetzungen mit sehr hohen Festigkeiten bei hohen Temperaturen wie insbesondere 85 °C.

Ein weiteres besonders geeignetes Polyetherpolyol **A4** weist eine OH-Funktionalität im Bereich von 2.2 bis 3 und ein mittleres Molekulargewicht im Bereich von 400 bis 3000 g/mol, bevorzugt 400 bis 2000 g/mol, insbesondere 400 bis 1000 g/mol, auf. Ein solches Polyethertriol ermöglicht besonders hohe Festigkeiten bei hohen Temperaturen wie insbesondere 85 °C.

Am meisten bevorzugt als Polyetherpolyol **A4** ist ein Polyetherpolyol **A4** mit einer OH-Funktionalität im Bereich von 2.2 bis 3 und einem mittleren Molekulargewicht im Bereich von 400 bis 1000 g/mol. Ein solches Polyethertriol ermöglicht ganz besonders hohe Festigkeiten bei hohen Temperaturen und eine besonder hohe Formbeständigkeitstemperatur der Zusammensetzung.

Das Diol **A1** und das Diol **A2** sind in der Zusammensetzung in einer solchen Menge vorhanden, dass das Gewichtsverhältnis **A1/A2** im Bereich von 0.1 bis 1, bevorzugt 0.1 bis 0.7, insbesondere 0.2 bis 0.6, liegt. In diesem Bereich weist die Zusammensetzung sehr gute Haftungseigenschaften bei hoher Festigkeit auf.

Weiterhin sind das Diol **A1,** das Diol **A2,** das Polybutadienpolyol **A3** und das Polyetherpolyol **A4** in der Zusammensetzung in einer solchen Menge vorhanden, dass das Gewichtsverhältnis **(A3+A4)/(A1+A2)** im Bereich von 1.8 bis 8, bevorzugt 1.8 bis 5.5, insbesondere bevorzugt 1.8 bis 5, am meisten bevorzugt 1.8 bis 3, liegt. In diesem Bereich weist die Zusammensetzung eine sehr hohe Festigkeit bei guter Elastizität und eine hohe Formbeständigkeitstemperatur auf.

Weiterhin liegt der Anteil an Polybutadienpolyol **A3** bezogen auf alle in der ersten Komponente vorhandenen Polyole im Bereich von 30 bis 80 Gewichts-%, bevorzugt 35 bis 70 Gewichts-%, insbesondere 35 bis 60 Gewichts-%. Dies bedeutet, dass die Zusammensetzung einen hohen Anteil an Polybutadienpolyol **A3** enthält, auch wenn zusätzlich zu den Diolen **A1** und **A2** und dem Polybutadienpolyol **A3** und dem Polyetherpolyol **A4** in der ersten Komponente weitere Polyole vorhanden sind. Der hohe Gehalt an Polybutadienpolyol **A3** gewährleistet die erwünschten temperaturunabhängigen mechanischen Eigenschaften und die hohe Beständigkeit gegenüber Feuchtigkeit der beschriebenen Zusammensetzung.

Das Polyetherpolyol **A4** ist in der Zusammensetzung bevorzugt insbesondere in einer solchen Menge vorhanden, dass das Gewichtsverhältnis **A4/A3** im Bereich von 0.1 bis 1, bevorzugt 0.2 bis 0.85, insbesondere 0.3 bis 0.7, liegt. Eine solche Zusammensetzung weist besonders hohe Festigkeiten bei hohen Temperaturen auf.

In einer Ausführungsform der Erfindung kann die erste Komponente zusätzlich einen Monoalkohol **A5** mit einem Molekulargewicht im Bereich von 140 bis 340 g/mol, umfassen, welcher insbesondere mindestens eine Ethergruppe enthält, wobei der Monoalkohol **A5** in einer solchen Menge vorhanden ist, dass das Gewichtsverhältnis **A5/(A1+A2)** im Bereich von 0.1 bis 0.6, bevorzugt 0.1 bis 0.4, insbesondere 0.15 bis 3, liegt. Der Monoalkohol kann insbesondere die Verarbeitbarkeit der Zusammensetzung und die Temperaturunabhängigkeit der Zugscherfestigkeit verbessern.

Als Monoalkohol **A5** geeignet sind insbesondere alkoxylierte Derivate von Phenol, insbesondere ethoxyliertes oder propoxyliertes Phenol. Besonders geeignet als Monoalkohol **A5** ist 1-Phenoxy-2-propanol. Ein solcher Monoalkohol kann die Viskosität der ersten Komponente besonders gut erniedrigen, was vorteilhaft für die Verarbeitbarkeit der Zusammensetzung sein kann, und er kann die elastischen Eigenschaften in der Kälte verbessern.

In einer Ausführungsform der Erfindung ist die Zusammensetzung frei von Monoalkohol **A5.** Dies ist dahingehend von Vorteil, dass dadurch höhere Zugscherfestigkeitswerte bei tiefen Temperaturen und bei Raumtemperatur erhalten werden.

Die zweite Komponente der Zusammensetzung umfasst mindestens ein Polyisocyanat. Geeignete Polyisocyanate sind insbesondere monomere Di- oder Triisocyanate, sowie Oligomere, Polymere und Derivate der monomeren Di- oder Triisocyanate, sowie beliebige Mischungen davon.

Geeignete aromatische monomere Di- oder Triisocyanate sind insbesondere 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophenyl)thiophosphat.

Geeignete aliphatische monomere Di- oder Triisocyanate sind insbesondere 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methyl-ethyl)naphthalin, Dimer- und Trimerfettsäureisocyanate wie 3,6-Bis-(9-isocyanatononyl)-4,5-di-(1-heptenyl)cyclohexen (Dimeryldiisocyanat) und α,α,α',α',α",α"-Hexamethyl-1,3,5-mesitylentriisocyanat.

Davon bevorzugt sind MDI, TDI, HDI und IPDI.

Geeignete Oligomere, Polymere und Derivate der genannten monomeren Di- und Triisocyanate sind insbesondere abgeleitet von MDI, TDI, HDI und IPDI. Davon insbesondere geeignet sind kommerziell erhältliche Typen, insbesondere HDI-Biurete wie Desmodur® N 100 und N 3200 (von Bayer), Tolonate® HDB und HDB-LV (von Rhodia) und Duranate® 24A-100 (von Asahi Kasei); HDI-Isocyanurate, wie Desmodur® N 3300, N 3600 und N 3790 BA (alle von Bayer), Tolonate® HDT, HDT-LV und HDT-LV2 (von Rhodia), Duranate® TPA-100 und THA-100 (von Asahi Kasei) und Coronate® HX (von Nippon Polyurethane); HDI-Uretdione wie Desmodur® N 3400 (von Bayer); HDI-Iminooxadiazindione wie Desmodur® XP 2410 (von Bayer); HDI-Allophanate wie Desmodur® VP LS 2102 (von Bayer); IPDI-Isocyanurate, wie beispielsweise in Lösung als Desmodur® Z 4470 (von Bayer) oder in fester Form als Vestanat® T1890/ 100 (von Degussa); TDI-Oligomere wie Desmodur® IL (von Bayer); sowie gemischte Isocyanurate auf Basis TDI/HDI, zum Beispiel als Desmodur® HL (von Bayer). Weiterhin insbesondere geeeignet sind bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen oder MDI-Urethanen darstellen, bekannt unter Handelsnamen wie Desmodur® CD, Desmodur® PF, Desmodur® PC (alle von Bayer) oder Isonate® M 143 (von Dow), sowie Gemische aus MDI und MDI-Homologen (polymeres MDI oder PMDI), erhältlich unter Handelsnamen wie Desmodur® VL, Desmodur® VL50, Desmodur® VL R10, Desmodur® VL R20, Desmodur® VH 20 N und Desmodur® VKS 20F (alle von Bayer), Isonate® M 309, Voranate® M 229 und Voranate® M 580 (alle von Dow) oder Lupranat® M 10 R (von BASF). Die vorgenannten oligomeren Polyisocyanate stellen in der Praxis üblicherweise Gemische von Substanzen mit unterschiedlichen Oligomerisierungsgraden und/oder chemischen Strukturen dar. Vorzugsweise weisen sie eine mittlere NCO-Funktionalität von 2.1 bis 4.0 auf.

Bevorzugt ist das Polyisocyanat ausgewählt aus der Gruppe bestehend aus MDI, TDI, HDI und IPDI und Oligomeren, Polymeren und Derivaten der genannten Isocyanate, sowie Mischungen davon.

Bevorzugt enthält das Polyisocyanat Isocyanurat-, Iminooxadiazindion-, Uretdion-, Biuret-, Allophanat-, Carbodiimid-, Uretonimin- oder Oxadiazintrion-Gruppen.

Besonders bevorzugt als Polyisocyanat sind bei Raumtemperatur flüssige Formen von MDI. Dies sind insbesondere sogenannt polymeres MDI sowie MDI mit Anteilen von Oligomeren oder Derivaten davon. Der Gehalt an MDI (=4,4'-, 2,4'- oder 2,2'-Diphenylmethandiisocyanat und beliebige Gemische dieser Isomeren) solcher flüssiger Formen von MDI beträgt insbesondere 50 bis 95 Gewichts-%, insbesondere 60 bis 90 Gewichts-%.

Insbesondere bevorzugt als Polyisocyanat ist polymeres MDI und bei Raumtemperatur flüssige MDI-Typen, welche Anteile von MDI-Carbodiimiden oder deren Addukte enthalten.

Mit diesen Polyisocyanaten werden besonders gute Verarbeitungseigenschaften und besonders hohe Festigkeiten erhalten.

Das Polyisocyanat der zweiten Komponente kann Anteile von Isocyanatgruppen aufweisenden Polyurethanpolymeren enthalten. Entweder kann die zweite Komponente ein separat hergestelltes Isocyanatgruppen aufweisendes Polyurethanpolymer umfassen, oder das Polyisocyanat wurde mit mindestens einem Polyol, insbesondere einem Polyetherpolyol, vermischt, wobei die Isocyanatgruppen gegenüber den OH-Gruppen in einem hohen stöchiometrischen Überschuss vorliegen.

Bevorzugt enthält die zweite Komponente nur einen geringen Anteil an Isocyanatgruppen aufweisenden Polyurethanpolymeren, bevorzugt nicht mehr als 30 Gewichts-%, besonders bevorzugt nicht mehr als 20 Gewichts-%, insbesondere nicht mehr als 10 Gewichts-%, bezogen auf die Summe aus Polyisocyanat und Isocyanatgruppen aufweisenden Polyurethanpolymeren.

Am meisten bevorzugt enthält die zweite Komponente kein Isocyanatgruppen aufweisendes Polyurethanpolymer. Eine solche zweite Komponente ist besonders niedrigviskos, was eine gute Verarbeitbarkeit der Zusammensetzung ermöglicht, und sie ermöglicht Zusammensetzungen mit besonders hohen Festigkeiten.

Die Polyurethanzusammensetzung kann als Bestandteil der ersten Komponente zusätzlich weitere mit Isocyanatgruppen reaktionsfähige Substanzen enthalten.

Bevorzugt enthält die erste Komponente keine Polyesterpolyole. Anteile von Polyesterpolyolen bewirken typischerweise ein starkes Verspröden der ausgehärteten Zusammensetzung in der Kälte, was für die Verwendung als strukturellen Klebstoff mit einem möglichst temperaturunabhängigen mechanischen Verhalten im Temperaturbereich von - 35 bis 85 °C sehr unerwünscht ist.

Weiterhin bevorzugt enthält die erste Komponente keine Rizinusöl-basierten Polyole. Diese reduzieren die Zugscherfestigkeit der Zusammensetzung in einem unerwünschten Mass.

Besonders bevorzugt ist die erste Komponente frei von Polyesterpolyolen und von Rizinusöl-basierten Polyolen.

Weiterhin kann die Polyurethanzusammensetzung Katalysatoren enthalten, die die Reaktion von Hydroxylgruppen mit Isocyanatgruppen beschleunigen, insbesondere Zinn-, Zink-, Zirkonium- und Wismut-organische Metallkatalysatoren, zum Beispiel Dibutylzinndilaurat, oder tertiäre Amine, Amidine oder Guanidine, zum Beispiel 1,4-Diazabicyclo[2.2.2]octan (DABCO) oder 1,8-Di-azabicyclo[5.4.0]undec-7-en (DBU). Zur Erzielung einer Wärmeaktivierung können insbesondere die tertiären Amine, Amidine oder Guanidine mit Phenol oder Carbonsäuren, insbesondere phenolischen oder sonstigen aromatischen Carbonsäuren, reversibel ein Salz oder einen Komplex bilden, welches bei Erhöhung der Temperatur zersetzt wird.

Die Polyurethanzusammensetzung kann neben den bereits erwähnten weitere Bestandteile, wie sie der Fachmann aus der Zweikomponenten-Polyurethanchemie her kennt, enthalten. Diese können in nur einer Komponente oder in beiden vorhanden sein.

Als weitere Bestandteile bevorzugt sind anorganische und organische Füllstoffe, wie insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Mica (Kalium-AluminiumSilikat), Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metallpulver wie Aluminium, Kupfer, Eisen, Silber oder Stahl, PVC-Pulver oder Hohlkugeln.

Die Zugabe von Füllstoffen ist dahingehend von Vorteil, dass dadurch die Festigkeit der ausgehärteten Polyurethanzusammensetzung erhöht wird.

Bevorzugt enthält die Polyurethanzusammensetzung mindestens einen Füllstoff ausgewählt aus der Gruppe bestehend aus Carlciumcarbonat, Kaolin, Baryt, Talk, Quarzmehl, Dolomit, Wollastonit, Kaolin, calciniertes Kaolin und Mica.

Als weitere Bestandteile können weiterhin insbesondere Lösungsmittel, Weichmacher und/oder Extender, Pigmente, Rheologiemodifizierer wie insbesondere amorphe Kieselsäuren, Trocknungsmittel wie insbesondere Zeolithe, Haftvermittler wie insbesondere Trialkoxysilane, Stabilisatoren gegen Oxidation, Wärme, Licht- und UV-Strahlung, flammhemmende Substanzen, sowie oberflächenaktive Substanzen, insbesondere Netzmittel und Entschäumer, vorhanden sein.

Eine bevorzugte Polyurethanzusammensetzung enthält eine erste Komponente, welche
- 30 bis 90 Gewichts-%, bevorzugt 40 bis 80 Gewichts-%, insbesondere 50 bis 80 Gewichts-%, der Summe aus Diol **A1,** Diol **A2** Polybutadienpolyol **A3** und Polyetherpolyol **A4,** und
- 10 bis 70 Gewichts-%, bevorzugt 20 bis 50 Gewichts-%, insbesondere 20 bis 40 Gewichts-%, Füllstoffe,
sowie gegebenenfalls weitere Bestandteile enthält.

Eine bevorzugte Polyurethanzusammensetzung enthält eine zweite Komponente, welche 90 bis 100 Gewichts-%, insbesondere 95 bis 100 Gewichts-% einer bei Raumtemperatur flüssigen Formen von MDI enthält.

Die erste und die zweite Komponente werden vorteilhaft derart formuliert, dass ihr Mischungsverhältnis in Gewichtsteilen im Bereich von 10:1 bis 1:1, insbesondere 7.5:1 bis 2:1, liegt.

Das Mischungsverhältnis zwischen den beiden Komponenten ist vorzugsweise derart, dass in der vermischten Polyurethanzusammensetzung das Verhältnis zwischen der Anzahl Isocyanatgruppen und der Anzahl gegenüber Isocyanaten reaktiven Gruppen, vor der Aushärtung ungefähr im Bereich von 1.2 bis 1, bevorzugt 1.15 bis 1.05, liegt.

Die Herstellung der beiden Komponenten erfolgt getrennt voneinander und, zumindest für die zweite Komponente, vorzugsweise unter Ausschluss von Feuchtigkeit. Beide Komponenten werden typischerweise jeweils in einem eigenen Gebinde gelagert. Die weiteren Bestandteile der Polyurethanzusammensetzung können als Bestandteil der ersten oder der zweiten Komponente vorhanden sein, wobei gegenüber Isocyanatgruppen reaktive weitere Bestandteile bevorzugt ein Bestandteil der ersten Komponente sind. Ein geeignetes Gebinde zum Lagern der jeweiligen Komponente ist insbesondere ein Fass, ein Hobbock, ein Beutel, ein Eimer, eine Büchse, eine Kartusche oder eine Tube. Die Komponenten sind beide lagerstabil, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Die beiden Komponenten werden vor dem Vermischen der Zusammensetzung getrennt voneinander gelagert und erst bei oder unmittelbar vor der Anwendung miteinander vermischt. Sie sind vorteilhaft in einer Verpackung, welche aus zwei voneinander getrennten Kammern besteht, vorhanden.

In einem weiteren Aspekt umfasst die Erfindung eine Packung bestehend aus einer Verpackung mit zwei voneinander getrennten Kammern, welche jeweils die erste Komponente beziehungsweise die zweite Komponente der Zusammensetzung enthält.

Das Mischen erfolgt typischerweise über Statikmischer oder mit Hilfe von dynamischen Mischern. Beim Mischen ist darauf zu achten, dass die beiden Komponenten möglichst homogen vermischt werden. Werden die zwei Komponenten unvollständig gemischt, treten lokale Abweichungen vom vorteilhaften Mischungsverhältnis auf, was sich in einer Verschlechterung der mechanischen Eigenschaften auswirken kann.

Beim Kontakt der ersten Komponente mit Isocyanatgruppen der zweiten Komponente beginnt die Aushärtung durch chemische Reaktion. Dabei reagieren die vorhandenen Hydroxylgruppen und gegebenenfalls vorhandene weitere gegenüber Isocyanatgruppen reaktive Substanzen mit vorhandenen Isocyanatgruppen. Überschüssige Isocyanatgruppen reagieren mit vorhandener Feuchtigkeit. Als Resultat dieser Reaktionen härtet die Polyurethanzusammensetzung zu einem festen Material aus. Dieser Vorgang wird auch als Vernetzung bezeichnet.

Ein weiterer Gegenstand der Erfindung ist somit auch eine ausgehärtete Polurethanzusammensetzung, erhalten aus der Aushärtung der Polyurethanzusammensetzung wie im vorliegenden Dokument beschrieben.

Die beschriebene zweikomponentige Polyurethanzusammensetzung ist vorteilhaft verwendbar als struktureller Klebstoff oder als Vergussmasse.

Die Erfindung betrifft somit auch ein Verfahren zum Verkleben von einem ersten Substrat mit einem zweiten Substrat, welches die Schritte umfasst:
- Mischen der vorgängig beschriebenen ersten und zweiten Komponente,
- Applizieren der vermischten Polyurethanzusammensetzung auf mindestens eine der zu verklebenden Substratoberflächen,
- Fügen der zu verklebenden Substrate innerhalb der Offenzeit,
- Aushärten der Polyurethanzusammensetzung.

Dabei können die beiden Substrate aus dem gleichen oder unterschiedlichen Materialien bestehen.

Die Erfindung betrifft somit weiterhin auch ein Verfahren zum Verfüllen von Fugen und Spalten zwischen zwei Substraten, welches die Schritte umfasst:
- Mischen der vorgängig beschriebenen ersten und zweiten Komponente,
- Applizieren der vermischten Polyurethanzusammensetzung in die Fuge oder den Spalt,
- Aushärten der Polyurethanzusammensetzung.

In diesen Verfahren zum Verkleben oder zum Verfüllen von Fugen und Spalten sind geeignete Substrate insbesondere
- Glas, Glaskeramik, Glasmineralfasermatten;
- Metalle und Legierungen, wie Aluminium, Eisen, Stahl und Buntmetalle, sowie oberflächenveredelte Metalle und Legierungen, wie verzinkte oder verchromte Metalle;
- beschichtete und lackierte Substrate, wie pulverbeschichtete Metalle oder Legierungen und lackierte Bleche;
- Kunststoffe, wie Polyvinylchlorid (Hart- und Weich-PVC), Acrylonitril-Butadien-Styrol-Copolymere (ABS), Polycarbonat (PC), Polyamid (PA), Poly(methylmethacrylat) (PMMA), Polyester, Epoxidharze insbesondere Thermosets auf Epoxybasis, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie kohlefaserverstärkte Kunststoffe (CFK), glasfaserverstärkte Kunststoffe (GFK) und Sheet Moulding Compounds (SMC);
- Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites; sowie
- Beton, Mörtel, Ziegel, Gips und Natursteine wie Granit, Kalk- und Standstein oder Marmor.

In diesen Verfahren ist eines oder beide Substrate bevorzugt ein Metall oder eine Glaskeramik oder ein Glas oder ein glasfaserverstärkter Kunststoff oder ein kohlefaserverstärkter Kunststoff oder ein Thermoset auf Epoxybasis.

Die Substrate können bei Bedarf vor dem Applizieren der Zusammensetzung vorbehandelt werden. Derartige Vorbehandlungen umfassen insbesondere physikalische und/oder chemische Reinigungsverfahren, sowie das Aufbringen eines Haftvermittlers, einer Haftvermittlerlösung oder eines Primers.

Aus dem beschriebenen Verfahren zum Verkleben entsteht ein Artikel, bei welchem die Zusammensetzung zwei Substrate miteinander verbindet.

Dieser Artikel ist insbesondere ein Sandwichelement einer Leichtbaustruktur, ein Bauwerk, beispielsweise eine Brücke, ein industrielles Gut oder ein Konsumgut, insbesondere ein Fenster, ein Rotorblatt einer Windkraftanlage oder ein Transportmittel, insbesondere ein Fahrzeug, bevorzugt ein Automobil, ein Bus, ein Lastkraftwagen, ein Schienenfahrzeug oder ein Schiff, sowie ein Flugzeug oder ein Helikopter; oder ein Anbauteil eines solchen Artikels.

Die beschriebene Polyurethanzusammensetzung zeichnet sich durch eine hohe Festigkeit und Elastizität, welche über einen weiten Temperaturbereich von - 35 bis 85 °C recht konstant sind, und über gute, weitgehend temperaturunabhängige, Haftungseigenschaften auf metallischen Substraten aus. Aufgrund dieser Eigenschaften ist sie ganz besonders geeignet als struktureller Klebstoff für Verklebungen, welche unter Umgebungstemperaturen im Freien beansprucht werden.

Ein weiterer Gegenstand der Erfindung ist somit auch die Verwendung der beschriebenen Polyurethanzusammensetzung als struktureller Klebstoff zum Verkleben von zwei Substraten.

Durch den hohen Anteil an Polybutadienpolyol A3 ist die ausgehärtete Zusammensetzung sehr hydrophob und wasserabweisend. Dies kann einen hohen Wasserdampfdiffusionswiderstand des Materials begünstigen. Dadurch ist die Zusammensetzung insbesondere auch geeignet für Verklebungen, bei welchen wasserdampfempfindliche Komponenten, beispielsweise elektonische Bauteile, klebend abgedichtet werden sollen.

Ebenfalls vorteilhaft verwendbar ist die beschriebene Polyurethanzusammensetzung als Vergussmasse, insbesondere als Vergussmasse für das Verfüllen von Spalten und Fugen, zu Reparaturzwecken, als Ballastausgleichsmasse oder zum Schutz von elektronischen Bauteilen.

Die Polyurethanzusammensetzung wird weiter vorzugsweise als Vergussmasse, insbesondere als Elektrovergussmasse, eingesetzt. In einem weiteren Aspekt umfasst die Erfindung daher die Verwendung einer zweikomponentigen Polyurethanzusammensetzung als Vergussmasse, insbesondere als Elektrovergussmasse.

Typische Bespiele für Anwendungen der erfindungsgemässen Polyurethanzusammensetzungen finden sich auf dem Gebiet der Elektrovergussmassen.

In einem weiteren Aspekt umfasst die Erfindung daher ein Verfahren zu einem Verfüllen von Fugen und Spalten in einem Substrat umfassend die Schritte
a) Mischen der ersten Komponente und der zweiten Komponente einer zweikomponentigen Polyurethanzusammensetzung wie sie vorgehend beschrieben ist,
b) Applizieren der gemischten Polyurethanzusammensetzung in die zu überbrückende Fuge zwischen zwei Substraten oder in den zu verfüllenden Spalt auf der Oberfläche eines Substrates,
c) Aushärten der Polyurethanzusammensetzung in der Fuge oder im Spalt.

Als Substrate besonders geeignet sind Metall, Kunststoff, Holz, Glas, Keramik und faserverstärkte Kunststoffe, insbesondere Metall und faserverstärkte Kunststoffe.

In einem weiteren Aspekt umfasst die Erfindung daher auch einen verfüllten Artikel, welcher nach dem vorgehend beschriebenen Verfahren verfüllt wurde.

### Beispiele

### verwendete Substanzen:

| | |
|---|---|
| BPIP | Propoxyliertes Bisphenol A, mittleres Molekulargewicht ca. 400 g/mol, OH-Zahl 280 mg KOH/g (Simulsol™ BPIP/P von Seppic) |
| Ethylhexandiol | 2-Ethyl-1,3-hexandiol |
| Poly bd R45 | Polybutadienpolyol mit primären OH-Gruppen, OH-Funktionalität 2.4-2.6, mittleres Molekulargewicht ca. 2800 g/mol, OH-Zahl 47.1 mg KOH/g (Poly bd® R-45HTLO von Cray Valley) |
| Tetrol | Polyetherpolyol, alkoxyliertes aliphatisches Amin mit primären OH-Gruppen, OH-Funktionalität ca. 4, mittleres Molekulargewicht ca. 3700 g/mol, OH-Zahl 60 mg KOH/g (Lupranol® 1002/1 von BASF) |
| Triol | Trifunktionelles Polyetherpolyol auf Glycerinbasis mit sekundären Hydroxylgruppen, mittleres Molekulargewicht ca. 420 g/mol, OH-Zahl 400 mg KOH/g (Lupranol® 3300 von BASF) |
| Monoalkohol | 1-Phenoxypropan-2-ol |
| Poly bd R20 | Polybutadienpolyol mit primären OH-Gruppen, OH-Funktionalität 2.4-2.6, mittleres Molekulargewicht ca. 1300 g/mol, OH-Zahl ca. 101 mg KOH/g (Poly bd® R20LM von Cray Valley) |
| Krasol | Polybutadiendiol, OH-Funktionalität ca. 1.9, mittleres Molekulargewicht ca. 3000 g/mol, OH-Zahl ca. 36 mg KOH/g (Krasol® LBH P-3000 von Cray Valley) |
| Polycin | Ricinusöl-basiertes Polyol, OH-Funktionalität 2.2, mittleres Molekulargewicht 2610 g/mol, OH-Zahl 52 mg KOH/g (Polycin® GR-50 von Vertellus) |
| Diol-1 | Polypropylenglykol-Diol, mittleres Molekulargewicht ca. 400 g/mol, OH-Zahl ca. 260 mg KOH/g, (Voranol® P 400 von Dow) |
| Diol-2 | EO-endcapped Polypropylenglykol-Diol, mittleres Molekulargewicht ca. 4000 g/mol, OH-Zahl ca. 27.5 mg KOH/g, (Voranol® EP 1900 von Dow) |
| Füllstoff | mineralischer Füllstoff (Sillitin Z 86 von Hoffmann Mineral) |
| Additive | Stabilisatoren gegen Oxidation und UV-Licht und Dibutylzinndilaurat-Katalysator |
| Polyisocyanat | modifiziertes Diphenylmethandiisocyanat enthaltend MDI-Carbodiimid-Addukte, bei Raumemperatur flüssig, NCO-Gehalt 29.4 Gewichts-% (Isonate® M 143 von Dow) |

### Herstellung von Polyurethanzusammensetzungen

Für jede Zusammensetzung wurden die in den Tabellen 1, 3 und 5 angegebenen Inhaltsstoffe in den angegebenen Mengen (in Gewichtsteilen) der ersten Komponente-1 mittels eines Vakuumdissolvers unter Feuchtigkeitsausschluss zu einer homogenen Paste verarbeitet und aufbewahrt. Ebenso wurden die in den Tabellen 1, 3 und 5 angegebenen Inhaltsstoffe der zweiten Komponente-2 verarbeitet und aufbewahrt. Anschliessend wurden die beiden Komponenten mittels eines SpeedMixers® (DAC 150 FV, Hauschild) während 30 Sekunden zu einer homogenen Paste verarbeitet und diese unverzüglich folgendermassen geprüft:
Zur Bestimmung der mechanischen Eigenschaften wurde der Klebstoff in Hantelform gemäss ISO 527, Teil 2, 1B, gebracht und während 24 h bei 23°C und anschliessend während 3h bei 80°C gelagert bzw. ausgehärtet. Nach einer Konditionierungszeit von 24h bei der in den Tabellen 2, 4 und 6 angegebenen Temperatur (- 35 °C bzw. 23 °C bzw. 85 °C) wurden das Elastizitätsmodul im Bereich von 0.05 bis 0.25 % Dehnung **(**"**E-Modul**") die **Zugfestigkeit** und die **Bruchdehnung** der so hergestellten Probekörper gemäss ISO 527 auf einer Zwick Z020 Zugprüfmaschine bei der jeweils in den Tabellen angegebenen Temperatur und einer Prüfgeschwindigkeit von 50 mm/ min gemessen.

Zur Messung der **Zugscherfestigkeit** wurden diverse Prüfkörper hergestellt, wobei der Klebstoff jeweils 1 Minute nach Abschluss der Mischzeit zwischen zwei mit Heptan entfetteten KTL-lackierten Stahlblechen in einer Schichtdicke von 2 mm und auf einer überlappenden Klebefläche 15 x 45 mm aufgebracht wurde. Die Prüfkörper wurden während 24 h bei 23°C und anschliessend während 3h bei 80°C gelagert bzw. ausgehärtet. Nach einer Konditionierungszeit von 24h bei der in den Tabellen 2, 4 und 6 angegebenen Temperatur (- 35 °C bzw. 23 °C bzw. 85 °C) wurde die Zugscherfestigkeit nach DIN EN 1465 bestimmt.

Die T**g-**Werte (Glasumwandlungspunkte) wurden bestimmt anhand von DMTA-Messungen an scheibenförmigen Proben (Dicke 2-3 mm, Durchmesser 10 mm), welche während 7 Tagen im Normklima (23 °C, 50 % relative Feuchtigkeit) ausgehärtet waren, mit einem Mettler DMA/SDTA 861e Gerät. Die Messbedingungen waren: Messung in Scherung, 10 Hz Anregungsfrequenz und Aufheizrate von 5 K/min. Die Proben wurden auf - 60 °C abgekühlt und unter Bestimmung des komplexen Schermoduls G* [MPa] auf 200 °C erwärmt, wobei ein Maximum in der Kurve für den Verlustwinkel "tan δ" als Tg-Wert abgelesen wurde.

Die Formbeständigkeitsprüfung in der Wärme nach Martens, abgekürzt **"HDT"** (für "heat distorsion temperature"), wurde nach DIN EN ISO 75-1 und -2 an Proben mit einer Grösse von 10 x 64 x 4 mm (+/- 0.2 mm) mit einer Biegespannung von 1.8 MPa durchgeführt.

Die Resultate sind in den Tabellen 2, 4 und 6 angegeben.

Die Angaben **(A3+A4)/(A1+A2), A1/A2, A4/A3** und **A5/(A1+A2)** in den Tabellen 1 und 3 beziehen sich auf die Gewichtsverhältnisse der vorhandenen Diole **A1, A2,** Polybutadienpolyol **A3,** Polyetherpolyole **A4** und Monoalkohol **A5** in der jeweiligen Zusammensetzung. Die Angabe "% **A3** an Polyolen" in den Tabellen 1, 3 und 5 bezieht sich auf den Anteil an Polybutadienpolyol **A3** bezogen auf alle in der ersten Komponente vorhandenen Polyole in Gewichts-%.

Bei ***Z-1*** bis ***Z-13*** handelt es sich um erfindungsgemässe Beispiele. Bei ***Ref-1*** bis ***Ref-13*** handelt es sich um Vergleichsbeispiele.

**Tabelle 1**

| | **Beispiele** | ***Z-1*** | ***Z-2*** | ***Z-3*** | ***Z-4*** | ***Z-5*** | ***Z-6*** | ***Z-7*** | ***Z-8*** | ***Z-9*** | ***Z-10*** |
|---|---|---|---|---|---|---|---|---|---|---|---|
| Komponente-1: | | | | | | | | | | | |
| | BPIP | 2.0 | 3.1 | 3.0 | 3.1 | 3.1 | 3.0 | 2.9 | 4.0 | 4.0 | 2.9 |
| | Ethylhexandiol | 3.4 | 12.4 | 12.0 | 12.4 | 9.4 | 9.1 | 14.0 | 18.0 | 18.0 | 14.0 |
| | Poly bd R45 | 30.0 | 38.1 | 37.0 | 38.1 | 40.3 | 39.1 | 32.0 | 27.0 | 27.0 | 32.0 |
| | Tetrol | 9.6 | 14.7 | 14.7 | - | - | - | - | - | - | - |
| | Triol | - | - | - | 15.2 | 16.0 | 15.5 | 16.5 | 18.0 | 18.0 | 16.5 |
| | Monoalkohol | - | - | 2.9 | - | - | 2.9 | - | - | 2.9 | 2.9 |
| | Füllstoff | 54.1 | 32.1 | 29.0 | 30.8 | 30.8 | 29.9 | 33.8 | 32.2 | 29.3 | 28.0 |
| Additive | | 0.9 | 0.5 | 0.5 | 0.5 | 0.5 | 0.5 | 0.8 | 0.8 | 0.8 | 0.8 |
| **(A3+A4)/(A1 +A2)** | | 7.3 | 3.4 | 3.4 | 3.4 | 4.5 | 4.5 | 2.9 | 2.9 | 2.0 | 2.0 |
| **A1/A2** | | 0.59 | 0.25 | 0.25 | 0.25 | 0.33 | 0.33 | 0.21 | 0.21 | 0.22 | 0.22 |
| **A4/A3** | | 0.32 | 0.39 | 0.40 | 0.40 | 0.40 | 0.40 | 0.52 | 0.52 | 0.67 | 0.67 |
| % **A3** an Polyolen | | 67% | 56% | 55% | 55% | 59% | 59% | 49% | 49% | 40% | 40% |
| **A5/(A1+A2)** | | - | - | 0.19 | - | - | 0.24 | - | - | 0.13 | 0.17 |
| Komponente-2: | | | | | | | | | | | |
| | Polyisocyanat | 14.0 | 37.0 | 40.0 | 51.0 | 46.0 | 49.0 | 53.0 | 62.0 | 65.0 | 56.0 |

**Tabelle 2 "n.b." steht für "nicht bestimmt"**

| **Beispiele** | ***Z-1*** | ***Z-2*** | ***Z-3*** | ***Z-4*** | ***Z-5*** | ***Z-6*** | ***Z-7*** | ***Z-8*** | ***Z-9*** | ***Z-10*** |
|---|---|---|---|---|---|---|---|---|---|---|
| **Zugscherfestigkeit** [MPa] | | | | | | | | | | |
| - 35 °C | 12.7 | 12.5 | 10.8 | 11.2 | 12.4 | 11.0 | 11.0 | 11.8 | 8.7 | 10.1 |
| 23 °C | 8.7 | 9.9 | 11.4 | 9.4 | 10.4 | 10.5 | 10.7 | 9.5 | 9.2 | 7.5 |
| 85 °C | 3.8 | 3.0 | 2.8 | 4.1 | 5.8 | 5.2 | 6.7 | 4.7 | 6.0 | 7.5 |
| **Zugfestigkeit** [MPa] | | | | | | | | | | |
| - 35 °C | 28.2 | 37.6 | 37.0 | 43.6 | 12.2 | 12.2 | 18.3 | 12.6 | 11.8 | 27.6 |
| 23 °C | 10.8 | 16.4 | 15.3 | 24.6 | 21.2 | 18.4 | 27.4 | 27.1 | 27.0 | 32.0 |
| 85 °C | 4.5 | 4.0 | 3.6 | 9.4 | 7.3 | 7.3 | 11.0 | 9.5 | 8.6 | 11.7 |
| **Bruchdehnung** [%] | | | | | | | | | | |
| - 35 °C | 30 | 25 | 30 | 13 | 8 | 8 | 1 | 1 | 2 | 2 |
| 23 °C | 105 | 110 | 130 | 40 | 50 | 40 | 15 | 10 | 4 | 5 |
| 85 °C | 50 | 120 | 75 | 110 | 110 | 60 | 90 | 115 | 165 | 85 |
| **E-Modul** [MPa] | | | | | | | | | | |
| - 35 °C | 1030 | 780 | 785 | 1085 | 665 | 785 | 1880 | 1130 | 1030 | 890 |
| 23 °C | 74 | 99 | 389 | 736 | 1150 | 685 | 1680 | 1290 | 930 | 1780 |
| 85 °C | 13 | 6 | 11 | 34 | 18 | 52 | 55 | 90 | 20 | 300 |
| **Tg** [°C] | -65 / 41 / 150 | -63 / 73 / 149 | 73 / 148 | -66 / 104 | -60 / 81 | -65 / 93 / 150 | -65 / 102 / 150 | 107 | -65 / 106 / 150 | 110 |
| **HDT** [°C] | n.b. | n.b. | n.b. | 59 | n.b. | n.b. | 59 | 64 | 61 | 65 |

**Tabelle 3**

| **Beispiele** | | ***Z-11*** | ***Z-12*** | ***Z-13*** | ***Ref-1*** | ***Ref***-***2*** | ***Ref***-***3*** | ***Ref***-***4*** | ***Ref***-***5*** | ***Ref***-***6*** |
|---|---|---|---|---|---|---|---|---|---|---|
| Komponente-1: | | | | | | | | | | |
| | BPIP | 3.0 | 3.0 | 3.0 | 3.0 | 3.0 | 3.0 | 3.0 | 3.1 | 3.0 |
| | Ethylhexandiol | - | - | 12.0 | 12.0 | 9.1 | 9.1 | 9.1 | 5.2 | 9.1 |
| | 1,4-Butandiol | 6.7 | 6.7 | - | - | - | - | - | | - |
| | Poly bd R45 | 37.0 | 37.0 | 37.0 | - | - | - | - | 60.6 | 39.1 |
| | Poly bd R20 | - | - | - | 37.0 | 39.1 | - | - | - | - |
| | Krasol | - | - | - | - | - | 39.1 | - | - | - |
| | Polycin | - | - | - | - | - | - | 39.1 | - | - |
| | Tetrol | 14.7 | - | - | 14.7 | - | - | - | - | - |
| | Triol | - | 14.7 | 14.7 | - | 15.5 | 15.5 | 15.5 | - | - |
| | Diol-1 | - | - | - | - | - | - | - | - | 15.5 |
| | Diol-2 | - | - | - | - | - | - | - | - | - |
| | Monoalkohol | 2.9 | 2.9 | 2.9 | 2.9 | 2.9 | 2.9 | 2.9 | - | 2.9 |
| | Füllstoff | 35.2 | 35.2 | 29.9 | 29.9 | 29.9 | 29.9 | 29.9 | 30.6 | 29.9 |
| | Additive | 0.5 | 0.5 | 0.5 | 0.5 | 0.5 | 0.5 | 0.5 | 0.5 | 0.5 |
| **(A3+A4)/(A1 +A2)** | | 5.3 | 5.3 | 3.4 | | | | | | |
| **A1/A2** | | 0.45 | 0.45 | 0.25 | | | | | | |
| **A4/A3** | | 0.4 | 0.4 | 0.4 | | | | | | |
| % **A3** an Polyolen | | 58% | 58% | 53% | | | | | | |
| **A5/(A1+A2)** | | 0.3 | 0.3 | 0.2 | | | | | | |
| Komponente-2: | | | | | | | | | | |
| | Polyisocyanat | 37.0 | 46.0 | 54.0 | 46.0 | 55.0 | 47.0 | 49.0 | 22.0 | 33.0 |

**Tabelle 4 "n.b." steht für "nicht bestimmt"**

| **Beispiele** | ***Z-11*** | ***Z-12*** | ***Z-13*** | ***Ref-1*** | ***Ref***-***2*** | ***Ref***-***3*** | ***Ref***-***4*** | ***Ref***-***5*** | ***Ref***-***6*** |
|---|---|---|---|---|---|---|---|---|---|
| **Zugscherfestigkeit** [MPa] | | | | | | | | | |
| - 35 °C | 12.5 | 11.4 | 11.1 | 7.6 | 9.5 | 11.6 | 5.2 | 14.3 | 3.3 |
| 23 °C | 7.7 | 8.4 | 11.7 | 10.9 | 9.6 | 5.7 | 3.8 | 9.2 | 1.6 |
| 85 °C | 2.4 | 3.8 | 6.1 | 1.8 | 5.0 | 1.2 | 1.1 | 2.1 | 0.1 |
| **Zugfestigkeit** [MPa] | | | | | | | | | |
| - 35 °C | 28.2 | 30.1 | 44.1 | 6.1 | 32.4 | 24.8 | 1.6 | 27.9 | n.b. |
| 23 °C | 10.8 | 17.9 | 25.1 | 23.5 | 30.0 | 16.3 | 13.9 | 10.1 | n.b. |
| 85 °C | 3.8 | 5.5 | 8.9 | 2.8 | 3.1 | 5.7 | 3.1 | 2.6 | n.b. |
| **Bruchdehnung** [%] | | | | | | | | | |
| - 35 °C | 25 | 15 | 15 | 2 | 3 | 13 | 2 | 175 | n.b. |
| 23 °C | 80 | 30 | 42 | 45 | 30 | 25 | 4 | 220 | n.b. |
| 85 °C | 120 | 100 | 137 | 170 | 90 | 40 | 65 | 135 | n.b. |
| **E-Modul** [MPa] | | | | | | | | | |
| - 35 °C | 610 | 1276 | 1204 | 1557 | 556 | 376 | 429 | 137 | n.b. |
| 23 °C | 124 | 490 | 795 | 868 | 1040 | 287 | 634 | 24 | n.b. |
| 85 °C | 16 | 31 | 39 | 3 | 5 | 48 | 11 | 4 | n.b. |
| **Tg**[°C] | -63 / 49 / 153 | -66 / 87 / 148 | -66 / 100 | 68 / 151 | 75 | n.b. | -22 / 90 / 150 | -58 / 66 | 54 / 146 |

**Tabelle 5**

| **Beispiele** | ***Ref-7*** | ***Ref-8*** | ***Ref***-***9*** | ***Ref***-***10*** | ***Ref***-***11*** | ***Ref***-***12*** | ***Ref-13*** |
|---|---|---|---|---|---|---|---|
| Komponente-1: | | | | | | | |
| BPIP | 3.0 | - | - | 1.0 | 1.0 | - | - |
| Ethylhexandiol | 12.0 | 12.0 | 12.0 | 12.4 | 12.4 | 12.4 | 12.4 |
| 1,4-Butandiol | - | - | - | - | - | - | - |
| Poly bd R45 | 37.0 | 37.0 | 37.0 | 38.1 | 38.1 | 38.1 | 38.1 |
| Poly bd R20 | - | - | - | - | - | - | - |
| Krasol | - | - | - | - | - | - | - |
| Polycin | - | - | - | - | - | - | - |
| Tetrol | - | 14.7 | - | 14.7 | - | 14.7 | - |
| Triol | - | - | 14.7 | - | 15.2 | - | 15.2 |
| Diol-1 | - | - | - | - | - | - | - |
| Diol-2 | 14.7 | - | - | - | - | - | - |
| Monoalkohol | 2.9 | 2.9 | 2.9 | 2.9 | 2.9 | - | - |
| Füllstoff | 29.9 | 32.5 | 32.5 | 30.0 | 29.6 | 34.0 | 33.5 |
| Additive | 0.5 | 0.9 | 0.9 | 0.9 | 0.9 | 0.8 | 0.8 |
| Komponente-2: | | | | | | | |
| Polyisocyanat | 25.0 | 37 | 51 | 39 | 54 | 35 | 50 |

**Tabelle 6 "n.b." steht für "nicht bestimmt"**

| **Beispiele** | ***Ref***-***7*** | ***Ref***-***8*** | ***Ref-9*** | ***Ref-10*** | ***Ref-11*** | ***Ref***-***12*** | ***Ref-13*** |
|---|---|---|---|---|---|---|---|
| **Zugscherfestigkeit** [MPa] | 9.8 | 10.8 | 13.1 | 9.8 | 11.9 | 12 | n.b |
| - 35 °C | | | | | | | |
| 23 °C | 5.7 | 6.4 | 9.5 | 6.4 | 9.7 | 8 | n.b |
| 85 °C | 0.3 | 1 | 1.9 | 1 | 2.2 | 2.7 | n.b |
| **Zugfestigkeit** [MPa] | 13.1 | 8.2 | 8.9 | 9.2 | 12.1 | 6.5 | 21 |
| - 35 °C | | | | | | | |
| 23 °C | 10.5 | 9 | 13.2 | 9.4 | 15.1 | 12.4 | 16.7 |
| 85 °C | 1.3 | 1 | 2.4 | 1.9 | 3.5 | 4.9 | 7.1 |
| **Bruchdehnung** [%] | 5 | 0.7 | 0.6 | 0.7 | 1 | 0.3 | 2.3 |
| - 35 °C | | | | | | | |
| 23 °C | 80 | 28 | 19 | 38 | 32 | 107 | 26 |
| 85 °C | 420 | 252 | 155 | 188 | 129 | 119 | 105 |
| **E-Modul** [MPa] | 1146 | 1218 | 923 | 963 | 951 | 1640 | 759 |
| - 35 °C | | | | | | | |
| 23 °C | 328 | 44 | 33 | 17 | 278 | 19 | 309 |
| 85 °C | 2 | 1 | 7 | 3 | 21 | 9 | 44 |
| **Tg** [°C] | -65 / 69 / 146 | -65 / 77 / 155 | -65 / 105 / 155 | -65 / 79 / 155 | -65 / 100 | -65 / 79 / 155 | -65 / 105 |

## Patentansprüche

1. Polyurethanzusammensetzung bestehend aus einer ersten und einer zweiten Komponente; wobei
- die erste Komponente
- mindestens ein alkoxyliertes aromatisches Diol **A1** mit einem mittleren Molekulargewicht im Bereich von 300 bis 1'000 g/mol,
- mindestens ein aliphatisches oder cycloaliphatisches Diol **A2** mit einem Molekulargewicht im Bereich von 90 bis 200 g/mol,
- mindestens ein Polybutadienpolyol **A3** mit einer mittleren OH-Funktionalität im Bereich von 2.1 bis 2.9, insbesondere 2.3 bis 2.7, und mit einem mitleren Molekulargewicht im Bereich von 2000 bis 4000 g/mol, insbesondere 2500 bis 3000 g/mol, und
- mindestens ein Polyetherpolyol **A4** mit einer OH-Funktionalität im Bereich von 2.2 bis 4 und einem mittleren Molekulargewicht im Bereich von 400 bis 4000 g/mol umfasst; und
- die zweite Komponente
- mindestens ein Polyisocyanat umfasst;
wobei das Diol **A1,** das Diol **A2,** das Polybutadienpolyol **A3** und das Polyetherpolyol **A4** in einer solchen Menge vorhanden sind, dass
- das Gewichtsverhältnis **A1/A2** im Bereich von 0.1 bis 1, bevorzugt 0.1 bis 0.7, insbesondere 0.2 bis 0.6, liegt,
- das Gewichtsverhältnis **(A3+A4)/(A1+A2)** im Bereich von 1.8 bis 8, bevorzugt 1.8 bis 5.5, insbesondere bevorzugt 1.8 bis 5, am meisten bevorzugt 1.8 bis 3, liegt, und
- der Anteil an Polybutadienpolyol **A3** bezogen auf alle in der ersten Komponente vorhandenen Polyole im Bereich von 30 bis 80 Gewichts-%, bevorzugt 35 bis 70 Gewichts-%, insbesondere 35 bis 60 Gewichts-%, liegt,
- wobei als mittleres Molekulargewicht das zahlenmittlere Molekulargewicht Mₙ einer oligomeren oder polymeren Mischung von Molekülen bezeichnet wird, welches üblicherweise mittels GPC gegen Polystyrol als Standard bestimmt wird.

2. Polyurethanzusammensetzung gemäss Anspruch 1, **dadurch gekennzeichnet, dass** das alkoxylierte aromatische Diol **A1** ein propoxyliertes Bisphenol A oder ein propoxyliertes Bisphenol F, insbesondere ein propoxyliertes Bisphenol A, darstellt.

3. Polyurethanzusammensetzung gemäss einem der vorhergehenden Ansprüche, **dadurch gekennzeichnet, dass** das aliphatische oder cycloaliphatische Diol **A2** ausgewählt ist aus der Gruppe bestehend aus 1,3-Butandiol, 2,3-Butandiol, 2-Methyl-1,3-propandiol, 1,2-Pentandiol, 2,4-Pentandiol, 2-Methyl-1,4-butandiol, 2,2-Dimethyl-1,3-propandiol, 1,2-Hexandiol, 1,4-Butandiol, 3-Methyl-1,5-pentandiol, 1,2-Octandiol, 3,6-Octandiol, 2-Ethyl-1,3-hexandiol, 2,2,4-Trimethyl-1,3-pentandiol, 2-Butyl-2-ethyl-1,3-propandiol, 2,7-Dimethyl-3,6-octandiol, 1,4-Cyclohexandiol, 1,3-Cyclohexandimethanol und 1,4-Cyclohexandimethanol.

4. Polyurethanzusammensetzung gemäss einem der vorhergehenden Ansprüche, **dadurch gekennzeichnet, dass** das Polyetherpolyol **A4** eine OH-Funktionalität im Bereich von 3.1 bis 4 und ein mittleres Molekulargewicht im Bereich von 1000 bis 4000 g/mol, bevorzugt 2000 bis 4000 g/mol, insbesondere 3000 bis 4000 g/mol, aufweist.

5. Polyurethanzusammensetzung gemäss einem der Ansprüche 1 - 3, **dadurch gekennzeichnet, dass** das Polyetherpolyol **A4** eine OH-Funktionalität im Bereich von 2.2 bis 3 und ein mittleres Molekulargewicht im Bereich von 400 bis 3000 g/mol, bevorzugt 400 bis 2000 g/mol, insbesondere 400 bis 1000 g/mol, aufweist.

6. Polyurethanzusammensetzung gemäss einem der vorhergehenden Ansprüche, **dadurch gekennzeichnet, dass** das Polyetherpolyol **A4** in einer solchen Menge vorhanden ist, dass das Gewichtsverhältnis **A4/A3** im Bereich von 0.1 bis 1, bevorzugt 0.2 bis 0.85, insbesondere 0.3 bis 0.7, liegt.

7. Polyurethanzusammensetzung gemäss einem der vorhergehenden Ansprüche, **dadurch gekennzeichnet, dass** die erste Komponente zusätzlich einen Monoalkohol **A5** mit einem Molekulargewicht im Bereich von 140 bis 340 g/mol umfasst, wobei der Monoalkohol **A5** in einer solchen Menge vorhanden ist, dass das Gewichtsverhältnis **A5/(A1+A2)** im Bereich von 0.1 bis 0.6, bevorzugt 0.1 bis 0.4, insbesondere 0.15 bis 3, liegt.

8. Polyurethanzusammensetzung gemäss einem der vorgehenden Ansprüche, **dadurch gekennzeichnet, dass** das Polyisocyanat eine bei Raumtemperatur flüssige Form von 4,4'-, 2,4'- oder 2,2'-Diphenylmethandiisocyanat und beliebige Gemische dieser Isomeren (MDI) in Form von polymerem MDI oder MDI mit Anteilen von Oligomeren oder Derivaten ist.

9. Polyurethanzusammensetzung gemäss einem der vorgehenden Ansprüche, **dadurch gekennzeichnet, dass** die zweite Komponente kein Isocyanatgruppen aufweisendes Polyurethanpolymer enthält.

10. Polyurethanzusammensetzung gemäss einem der vorgehenden Ansprüche, **dadurch gekennzeichnet, dass** die erste Komponente frei von Polyesterpolyolen und von Rizinusöl-basierten Polyolen ist.

11. Polyurethanzusammensetzung gemäss einem der vorgehenden Ansprüche, **dadurch gekennzeichnet, dass** das Mischungsverhältnis in Gewichtsteilen zwischen der ersten und der zweiten Komponente im Bereich von 10:1 bis 1:1, insbesondere 7.5:1 bis 2:1, liegt.

12. Verfahren zum Verkleben von einem ersten Substrat mit einem zweiten Substrat, umfassend die Schritte
- Mischen der ersten und der zweiten Komponente einer Polyurethanzusammensetzung gemäss einem der Ansprüche 1 bis 11,
- Applizieren der vermischten Polyurethanzusammensetzung auf mindestens eine der zu verklebenden Substratoberflächen,
- Fügen der zu verklebenden Substrate innerhalb der Offenzeit
- Aushärten der Polyurethanzusammensetzung.

13. Artikel entstanden aus dem Verfahren zum Verkleben gemäss Anspruch 12.

14. Verwendung einer Polyurethanzusammensetzung gemäss einem der Ansprüche 1 bis 11 als struktureller Klebstoff für das Verkleben von zwei Substraten.

15. Verfahren zu einem Verfüllen von Fugen und Spalten in einem Substrat umfassend die Schritte
a) Mischen der ersten Komponente und der zweiten Komponente einer Polyurethanzusammensetzung gemäss einem der Ansprüche 1 bis 11,
b) Applizieren der gemischten Polyurethanzusammensetzung in die zu überbrückende Fuge zwischen zwei Substraten oder in den zu verfüllenden Spalt auf der Oberfläche eines Substrates,
c) Aushärten der Polyurethanzusammensetzung in der Fuge oder im Spalt.

## Claims

1. A polyurethane composition consisting of a first component and a second component; where
- the first component comprises
- at least one alkoxylated aromatic diol **A1** having an average molecular weight in the range from 300 to 1000 g/mol,
- at least one aliphatic or cycloaliphatic diol **A2** having a molecular weight in the range from 90 to 200 g/mol,
- at least one polybutadiene polyol **A3** having an average OH functionality in the range from 2.1 to 2.9, more particularly 2.3 to 2.7, and having an average molecular weight in the range from 2000 to 4000 g/mol, more particularly 2500 to 3000 g/mol, and
- at least one polyether polyol **A4** having an OH functionality in the range from 2.2 to 4 and an average molecular weight in the range from 400 to 4000 g/mol; and
- the second component
- comprises at least one polyisocyanate;
the diol **A1,** the diol **A2,** the polybutadiene polyol **A3,** and the polyether polyol **A4** being present in an amount such that
- the weight ratio **A1/A2** is in the range from 0.1 to 1, preferably 0.1 to 0.7, more particularly 0.2 to 0.6,
- the weight ratio **(A3+A4) / (A1+A2)** is in the range from 1.8 to 8, preferably 1.8 to 5.5, especially preferably 1.8 to 5, most preferably 1.8 to 3, and
- the fraction of polybutadiene polyol **A3,** based on all the polyols present in the first component, is in the range from 30 to 80 weight%, preferably 35 to 70 weight%, more particularly 35 to 60 weight%,
- where the average molecular weight refers to the number average molecular weight Mₙ of an oligomeric or polymeric mixture of molecules, which is typically determined by means of GPC against polystyrene as standard.

2. The polyurethane composition as claimed in claim 1, **characterized in that** the alkoxylated aromatic diol **A1** is a propoxylated bisphenol A or a propoxylated bisphenol F, more particularly a propoxylated bisphenol A.

3. The polyurethane composition as claimed in either of the preceding claims, **characterized in that** the aliphatic or cycloaliphatic diol **A2** is selected from the group consisting of 1,3-butanediol, 2,3-butanediol, 2-methyl-1,3-propanediol, 1,2-pentanediol, 2,4-pentanediol, 2-methyl-1,4-butanediol, 2,2-dimethyl-1,3-propanediol, 1,2-hexanediol, 1,4-butanediol, 3-methyl-1,5-pentanediol, 1,2-octanediol, 3,6-octanediol, 2-ethyl-1,3-hexanediol, 2,2,4-trimethyl-1,3-pentanediol, 2-butyl-2-ethyl-1,3-propanediol, 2,7-dimethyl-3,6-octanediol, 1,4-cyclohexanediol, 1,3-cyclohexanedimethanol, and 1,4-cyclohexanedimethanol.

4. The polyurethane composition as claimed in any of the preceding claims, **characterized in that** the polyether polyol **A4** has an OH functionality in the range from 3.1 to 4 and an average molecular weight in the range from 1000 to 4000 g/mol, preferably 2000 to 4000 g/mol, more particularly 3000 to 4000 g/mol.

5. The polyurethane composition as claimed in any of claims 1-3, **characterized in that** the polyether polyol **A4** has an OH functionality in the range from 2.2 to 3 and an average molecular weight in the range from 400 to 3000 g/mol, preferably 400 to 2000 g/mol, more particularly 400 to 1000 g/mol.

6. The polyurethane composition as claimed in any of the preceding claims, **characterized in that** the polyether polyol **A4** is present in an amount such that the weight ratio **A4/A3** is in the range from 0.1 to 1, preferably 0.2 to 0.85, more particularly 0.3 to 0.7.

7. The polyurethane composition as claimed in any of the preceding claims, **characterized in that** the first component further comprises a monoalcohol **A5** having a molecular weight in the range from 140 to 340 g/mol, the monoalcohol **A5** being present in an amount such that the weight ratio **A5/(A1+A2)** is in the range from 0.1 to 0.6, preferably 0.1 to 0.4, more particularly 0.15 to 3.

8. The polyurethane composition as claimed in any of the preceding claims, **characterized in that** the polyisocyanate is a room-temperature-liquid form of 4,4'-, 2,4'-, or 2,2'-diphenylmethane diisocyanate and any desired mixtures of these isomers (MDI) in the form of polymeric MDI or MDI with fractions of oligomers or derivatives.

9. The polyurethane composition as claimed in any of the preceding claims, **characterized in that** the second component contains no polyurethane polymer containing isocyanate groups.

10. The polyurethane composition as claimed in any of the preceding claims, **characterized in that** the first component is free from polyester polyols and from castor oil-based polyols.

11. The polyurethane composition as claimed in any of the preceding claims, **characterized in that** the mixing ratio in parts by weight between the first component and the second component is in the range from 10:1 to 1:1, more particularly 7.5:1 to 2:1.

12. A method for adhesively bonding a first substrate to a second substrate, comprising the steps of
- mixing the first and second components of a polyurethane composition as claimed in any of claims 1 to 11,
- applying the mixed polyurethane composition to at least one of the substrate surfaces to be bonded,
- joining the substrates to be bonded, within the open time,
- curing the polyurethane composition.

13. An article resulting from the method for adhesive bonding as claimed in claim 12.

14. The use of a polyurethane composition as claimed in any of claims 1 to 11 as a structural adhesive for the adhesive bonding of two substrates.

15. A method for filling joints and gaps in a substrate, comprising the steps of
a) mixing the first component and the second component of a polyurethane composition as claimed in any of claims 1 to 11,
b) applying the mixed polyurethane composition into the joint to be bridged between two substrates or into the gap to be filled on the surface of a substrate,
c) curing the polyurethane composition in the joint or in the gap.

## Revendications

1. Composition de polyuréthane constituée d'un premier et d'un second composant ; dans laquelle
- le premier composant comprend
- au moins un diol aromatique alcoxylé **A1** ayant une masse moléculaire moyenne dans la plage de 300 à 1 000 g/mole,
- au moins un diol aliphatique ou cycloaliphatique **A2** ayant une masse moléculaire dans la plage de 90 à 200 g/mole,
- au moins un polybutadiènepolyol **A3** ayant une fonctionnalité OH moyenne dans la plage de 2,1 à 2,9, en particulier de 2,3 à 2,7, et ayant une masse moléculaire moyenne dans la plage de 2 000 à 4 000 g/mole, en particulier de 2 500 à 3 000 g/mole, et
- au moins un polyétherpolyol **A4** ayant une fonctionnalité OH dans la plage de 2,2 à 4 et une masse moléculaire moyenne dans la plage de 400 à 4 000 g/mole, et
- le second composant comprend
- au moins un polyisocyanate ;
le diol **A1,** le diol **A2,** le polybutadiènepolyol **A3** et le polyétherpolyol **A4** étant présents en une quantité telle que
- le rapport pondéral **A1/A2** se situe dans la plage de 0,1 à 1, de préférence de 0,1 à 0,7, en particulier de 0,2 à 0,6,
- le rapport pondéral **(A3+A4) / (A1+A2)** se situe dans la plage de 1,8 à 8, de préférence de 1,8 à 5,5, de façon particulièrement préférée de 1,8 à 5, de façon tout particulièrement préférée de 1,8 à 3, et
- la proportion de polybutadiènepolyol **A3** par rapport à tous les polyols présents dans le premier composant se situe dans la plage de 30 à 80 % en poids, de préférence de 35 à 70 % en poids, en particulier de 35 à 60 % en poids,
- en entendant par masse moléculaire moyenne la masse moléculaire moyenne en nombre Mₙ d'un mélange oligomère ou polymère de molécules, qui est habituellement déterminée par GPC contre du polystyrène en tant qu'étalon.

2. Composition de polyuréthane selon la revendication 1, **caractérisée en ce que** le diol aromatique alcoxylé **A1** représente un bisphénol A propoxylé ou un bisphénol F propoxylé, en particulier un bisphénol A propoxylé.

3. Composition de polyuréthane selon l'une quelconque des revendications précédentes, **caractérisée en ce que** le diol aliphatique ou cycloaliphatique **A2** est choisi dans le groupe constitué par le 1,3-butanediol, le 2,3-butanediol, le 2-méthyl-1,3-propanediol, le 1,2-pentanediol, le 2,4-pentanediol, le 2-méthyl-1,4-butanediol, le 2,2-diméthyl-1,3-propanediol, le 1,2-hexanediol, le 1,4-butanediol, le 3-méthyl-1,5-pentanediol, le 1,2-octanediol, le 3,6-octanediol, le 2-éthyl-1,3-hexanediol, le 2,2,4-triméthyl-1,3-pentanediol, le 2-butyl-2-éthyl-1,3-propanediol, le 2,7-diméthyl-3,6-octanediol, le 1,4-cyclohexanediol, le 1,3-cyclohexanediméthanol et le 1,4-cyclohexanediméthanol.

4. Composition de polyuréthane selon l'une quelconque des revendications précédentes, **caractérisée en ce que** le polyétherpolyol **A4** présente une fonctionnalité OH dans la plage de 3,1 à 4 et une masse moléculaire moyenne dans la plage de 1 000 à 4 000 g/mole, de préférence de 2 000 à 4 000 g/mole, en particulier de 3 000 à 4 000 g/mole.

5. Composition de polyuréthane selon l'une quelconque des revendications 1 à 3, **caractérisée en ce que** le polyétherpolyol **A4** présente une fonctionnalité OH dans la plage de 2,2 à 3 et une masse moléculaire moyenne dans la plage de 400 à 3 000 g/mole, de préférence de 400 à 2 000 g/mole, en particulier de 400 à 1 000 g/mole.

6. Composition de polyuréthane selon l'une quelconque des revendications précédentes, **caractérisée en ce que** le polyétherpolyol **A4** est présent en une quantité telle que le rapport pondéral **A4/A3** se situe dans la plage de 0,1 à 1, de préférence de 0,2 à 0,85, en particulier de 0,3 à 0,7.

7. Composition de polyuréthane selon l'une quelconque des revendications précédentes, **caractérisée en ce que** le premier composant comprend en outre un monoalcool **A5** ayant une masse moléculaire dans la plage de 140 à 340 g/mole, le monoalcool **A5** étant présent en une quantité telle que le rapport pondéral **A5/(A1+A2)** se situe dans la plage de 0,1 à 0,6, de préférence de 0,1 à 0,4, en particulier de 0,15 à 3.

8. Composition de polyuréthane selon l'une quelconque des revendications précédentes, **caractérisée en ce que** le polyisocyanate consiste en une forme liquide à la température ambiante de 4,4'-, 2,4'- ou 2,2'-diphénylméthane-diisocyanate et des mélanges quelconques de ses isomères (MDI) sous forme de MDI polymère ou de MDI comportant des portions d'oligomères ou de dérivés.

9. Composition de polyuréthane selon l'une quelconque des revendications précédentes, **caractérisée en ce que** le second composant ne contient pas de polymère polyuréthane comportant des groupes isocyanate.

10. Composition de polyuréthane selon l'une quelconque des revendications précédentes, **caractérisée en ce que** le premier composant est exempt de polyesterpolyols et de polyols à base d'huile de ricin.

11. Composition de polyuréthane selon l'une quelconque des revendications précédentes, **caractérisée en ce que** le rapport de mélange en parties en poids entre le premier composant et le second composant se situe dans la plage de 10:1 à 1:1, en particulier de 7,5:1 à 2:1.

12. Procédé pour le collage d'un premier substrat avec un second substrat, comprenant les étapes
- mélange du premier composant et du second composant d'une composition de polyuréthane selon l'une quelconque des revendications 1 à 11,
- application de la composition de polyuréthane mélangée sur au moins l'une des surfaces des substrats à coller,
- assemblage des substrats à coller, dans les limites du délai d'utilisation,
- durcissement de la composition de polyuréthane.

13. Article résultant du procédé pour le collage selon la revendication 12.

14. Utilisation d'une composition de polyuréthane selon l'une quelconque des revendications 1 à 11, en tant qu'adhésif structural pour le collage de deux substrats.

15. Procédé pour un comblement de joints et d'interstices dans un substrat, comprenant les étapes
a) mélange du premier composant et du second composant d'une composition de polyuréthane selon l'une quelconque des revendications 1 à 11,
b) application de la composition de polyuréthane mélangée dans le joint à ponter entre deux substrats ou dans l'interstice à combler sur la surface d'un substrat,
c) durcissement de la composition de polyuréthane dans le joint ou dans l'interstice.
